# EUROPEAN PATENT SPECIFICATION

(11) **EP 2 693 105 B1**
(45) Date of publication and mention of the grant of the patent: **11.09.2019**
(21) Application number: 13020058.7
(22) Date of filing: 23.07.2013
(51) Int. Cl.: F21S 41/147, F21S 41/275, F21S 41/27, F21S 43/14, F21S 43/40, F21S 43/20, B60Q 1/00, F21S 43/31

(54) **Vehicle lighting unit**
Fahrzeugbeleuchtungseinheit
Dispositif d'éclairage de véhicule

(30) Priority: 31.07.2012 JP 2012169351
(43) Date of publication of application: 05.02.2014
(73) Proprietor: Stanley Electric Co., Ltd., Meguro-ku Tokyo 153-8636 (JP)
(72) Inventor: Sato, Masanori, Tokyo, 153-8636 (JP); Sekiguchi, Tatsuya, Tokyo, 153-8636 (JP); Owada, Ryotaro, Tokyo, 153-8636 (JP)
(74) Representative: Carstens, Dirk Wilhelm

(56) References cited:
- EP-A2- 2 071 228
- EP-A2- 2 093 480
- DE-A1-102005 043 992
- DE-A1-102006 023 163
- DE-T2-602004 012 797

## Description

### Technical Field

The present invention relates to a vehicle lighting unit for use in, for example, a vehicle headlamp, as known from EP 2 093 480 A2.

### Background Art

Conventionally, there have been known vehicle headlamps to be mounted on a front portion of a vehicle body, which can include daytime running lamps (DRL) for improving conspicuousness of an automobile during daytime running in addition to the basic headlamp functions for forming a high beam (travelling beam) and a low beam (passing-by beam).

Since the formation of light distribution pattern for DRL is different from those for the low beam and the high beam, the vehicle headlamps having such a DRL function can include a DRL-dedicated optical system for controlling the light distribution for DRL in addition to the common optical system for a headlamp function. For example, Japanese Patent Application Laid-Open No. 2012-48896 discloses a vehicle headlamp including a lamp unit for a headlamp function, composed of a light source and a lens. The vehicle headlamp can separately include another lamp unit for achieving a DRL function, composed of a second light source and a second lens. In this vehicle headlamp, the lamp units can be controlled separately. U.S. Patent No. 7,460,985 discloses a vehicle headlamp including a plurality of lamp units to form a low beam (passing-by beam).

Since the conventional vehicle headlamp with the above-described configuration, the lens for the headlamp function and the second lens for the DRL function must be exposed on the front of the vehicle body in order to project light beams through both the lenses. This may enlarge the light emission unit of the entire headlamp when compared with headlamps without a DRL function. The too-large light emission unit may lead to the large-sized lighting unit as well as deterioration of design degree of freedom. In particular, a vehicle headlamp for use in a sports car is required to be miniaturized for the purpose of enhancing design degree of freedom. This means such a conventional vehicle headlamp with the above-described configuration cannot meet the demand.

### Summary

The present invention was devised in view of these and other problems and features in association with the conventional art. According to an aspect of the present invention, there is provided a vehicle lighting unit that can include a DRL function while the light emission unit thereof can be miniaturized more than the conventional vehicle headlamps.

According to another aspect of the present invention, a vehicle lighting unit can include a first light source; a light guiding lens provided forward of the first light source, configured to project light emitted from the first light source forward to form a high beam or a low beam; and a DRL unit including a second light source, configured to function as a daytime running lamp. In this vehicle lighting unit, the light guiding lens can include: a front surface; a rear surface; a light incident surface located in front of the first light source, configured to allow the light emitted from the first light source to enter the light guiding lens therethrough; a front reflection surface formed in the front surface, located in front of the light incident surface, the front reflection surface configured to internally reflect the light having entered the light guiding lens through the light incident surface to a direction obliquely rearward and toward one side (for example, downward) with respect to a direction (for example, vertical direction) approximately perpendicular to a front-rear direction; a rear reflection surface formed in the rear surface, located at a portion of the rear surface in the direction obliquely rearward and toward the one side with respect to the front reflection surface, the rear reflection surface configured to internally and forwardly reflect the light having been reflected by the front reflection surface; a light exiting surface formed in the front surface, located in front of the rear reflection surface, the light exiting surface configured to allow the light having been reflected by the rear reflection surface forward to be projected; and a light-transmitting section located between the front reflection surface and the rear reflection surface in terms of the above-mentioned perpendicular direction (vertical direction), the light-transmitting section configured to allow light to pass therethrough in the front-rear direction. The DRL unit can be disposed in the rear of the light-transmitting section of the light guiding lens so that the light emitted from the second light source can be projected forward while allowing the light to pass through the light-transmitting section.

In the vehicle lighting unit with the above configuration, the light guiding lens configured to form a high beam or a low beam, i.e., the light guiding lens for the headlamp function, can include a light-transmitting section between the front reflection surface and the rear reflection surface in terms of the vertical direction, with these reflection surfaces configured to allow light to control light distribution. Then, the DRL unit configured to function as a daytime running lamp can be located behind the light-transmitting section, so that the light from the DRL unit can pass through the light-transmitting section to be projected forward. This can eliminate the exposure of the DRL unit at a front portion of a vehicle body while the light from the DRL unit can be projected forward. Therefore, the light emission unit can be miniaturized more than the conventional vehicle headlamp in which two types of lenses for the headlamp function and the DRL function are exposed at a front portion of a vehicle body. The vehicle lighting unit according to the present invention can effectively exhibit the DRL function while the light emission unit can be miniaturized more than the conventional one.

The light-transmitting section configured to allow the light from the DRL unit to pass therethrough can be disposed between the front reflection surface configured to internally reflect light obliquely rearward and downward, for example, and the rear reflection surface configured to internally reflect the light from the front reflection surface forward in terms of the vertical direction. This means a region of the light guiding lens that is difficult to contribute to the control of the light distribution can be effectively utilized as the light-transmitting section. Therefore, the daytime running light can be projected without enlarging the light emission unit of the light guiding lens when compared with the case where a light-transmitting section is simply provided at an end portion of a light-guiding lens.

In the vehicle lighting unit with the above configuration, the light exiting surface of the light guiding lens being the light emission unit when functioning as a headlamp and the light-transmitting section of the light guiding lens being the light emission unit when functioning as a DRL can be located adjacent to each other within the same light guiding lens. Therefore, the light emission units during the operation of the respective lamp functions can be observed with a similar sense when compared with the case where a conventional headlamp with a DRL unit separately operates the light emission units through two separate light guiding lenses.

In the vehicle lighting unit with the above configuration, the DRL unit can be configured so as to emit part of light to a portion of the light guiding lens toward a second side opposite to the first side where the light-transmitting section is located. Here, the part of light can enter the light guiding lens and can be internally reflected by the front reflection surface and then the rear reflection surface to exit through the light exiting surface forward.

Furthermore, in the vehicle lighting unit with the above configuration, the DRL unit can include a second light guiding lens disposed in front of the second light source. The second light guiding lens can include:
a light incident portion provided in a rear of the second light guiding lens, the light incident portion collimating the light emitted forward from the second light source approximately along the front-rear direction while allowing the light to enter the second light guiding lens;
a center light guiding portion having a center light exiting surface located in the rear of a center portion of the light-transmitting section of the light guiding lens with respect to a second perpendicular direction approximately perpendicular to the front-rear direction and the perpendicular direction, the center light guiding portion configured to guide part of light having entered the second light guiding lens through the light incident portion on the first side to the center light exiting surface to be projected forward;
lateral light guiding portions having lateral light exiting surfaces disposed on both sides of the center light exiting surface in the second perpendicular direction and in the rear of the light-transmitting section of the light guiding lens on both sides of the center portion in the second perpendicular direction, the lateral light guiding portions configured to guide remaining part of the light having entered the second light guiding lens through the light incident portion through the lateral light exiting surfaces to be projected forward.

Furthermore, in the vehicle lighting unit with the above configuration, the light incident portion of the second light guiding lens can include:
a first light incident surface disposed to be opposite to the second light source, the first light incident surface configured to collimate the light emitted from the second light source forward approximately along the front-rear direction to allow the light to enter the second light guiding lens;
a second light incident surface extending from a peripheral edge of the first light incident surface rearward, the second light incident surface configured to receive light emitted outwardly from the second light source to allow the light to enter the second light guiding lens; and
a first reflection surface extending from a rear end of the second light incident surface while expanding forward and outward, the first reflection surface configured to internally reflect light having entered the second light guiding lens through the second light incident surface so that the light travels approximately along the front-rear direction.

Furthermore, in the vehicle lighting unit with the above configuration, the center light guiding portion of the second light guiding lens can include:
a second reflection surface provided on the first side in part of the second light guiding lens in front of the light incident portion, the second reflection surface configured to internally reflect part of the light having entered the second light guiding lens through the light incident portion on the first side toward the second side; and
a third reflection surface provided in the rear of the center light exiting surface on the second side with respect to the second reflection surface, the third reflection surface configured to internally reflect the light having been internally reflected by the second reflection surface toward the center light exiting surface.

Furthermore, in the vehicle lighting unit with the above configuration, the lateral light guiding portion of the second light guiding lens can include:
a fourth reflection surface provided in the second light guiding lens in front of the light incident portion on the second side except for the part on the first side, the fourth reflection surface configured to internally reflect part of the light having entered the second light guiding lens through the light incident portion except for the part of the light on the first side to the second perpendicular direction; and
a fifth reflection surface provided in the rear of the lateral light exiting surface in the second perpendicular direction with respect to the fourth reflection surface, the fifth reflection surface configured to internally reflect the part of the light having been internally reflected by the fourth reflection surface.

### Brief Description of Drawings

These and other characteristics, features, and advantages of the present invention will become clear from the following description with reference to the accompanying drawings, wherein:
Fig. 1 is a perspective view of a vehicle lighting unit serving as a vehicle headlamp of an exemplary embodiment according to the present invention;
Fig. 2 is a vertical cross-sectional view of the vehicle lighting unit of the present exemplary embodiment at its horizontal center;
Figs. 3A, 3B, 3C, and 3D are diagrams illustrating a light guiding lens for DRL in the present exemplary embodiment, 3A a perspective view thereof, 3B a front view thereof, 3C a horizontal cross-sectional view thereof, and 3D a vertical cross-sectional view thereof; and
Figs. 4A and 4B are diagrams illustrating optical paths within the vehicle lighting unit of the present exemplary embodiment.

### Description of Exemplary Embodiments

A description will now be made below to a vehicle lighting unit of the present invention with reference to the accompanying drawings in accordance with an exemplary embodiment.

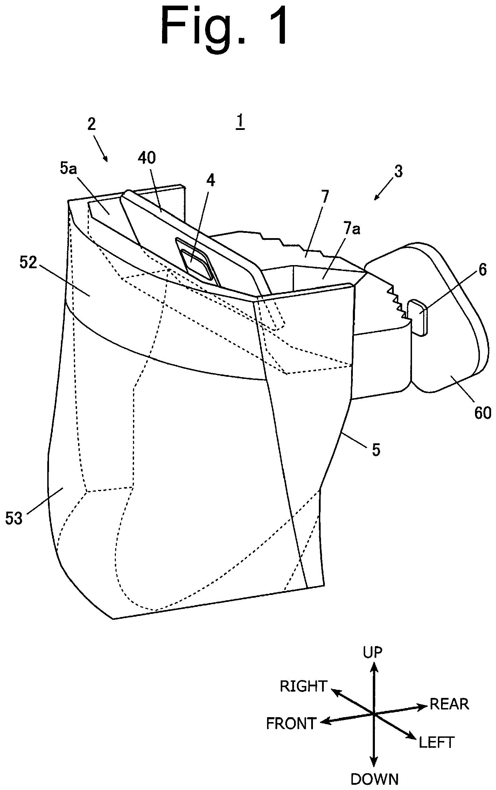

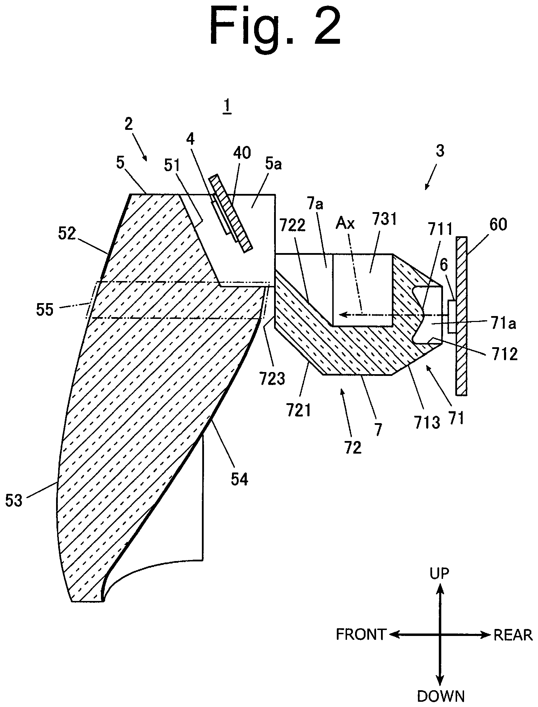

Fig. 1 is a perspective view of a vehicle lighting unit 1 serving as a vehicle headlamp. Fig. 2 is a vertical cross-sectional view of the vehicle lighting unit of the present exemplary embodiment at its horizontal center.

Note that in the present description, the directions of "front (forward)," "back (rear, rearward)," "left," "right," "up," and "down (low)" mean the directions when viewed with respect to the vehicle lighting unit 1 installed in a vehicle body to project light forward of the vehicle body.

As shown in Figs. 1 and 2, the vehicle lighting unit 1 can be installed onto a front portion of a vehicle body (not shown), so as to function as a headlamp (hereinafter, referred to as "HL") to form a low beam or a high beam while functioning as a daytime running lamp (hereinafter, referred to as "DRL") to be lit during the daytime travelling. The vehicle lighting unit 1 can include an HL unit 2 functioning mainly as HL and a DRL unit 3 functioning as DRL.

The HL unit 2 can include an HL light emitting diode (LED) 4 and an HL light guiding lens 5.

The HL LED 4 can serve as the first light source in the claims and be mounted on the front surface of a substrate 40 so that its light emission surface is directed obliquely forward and downward.

The HL light guiding lens 5 can serve as the light guiding lens in the claims and can control the light emitted from the HL LED 4 to project the light forward, thereby forming a low beam or a high beam in front of the vehicle body. The HL light guiding lens 5 can be formed in a rectangular shape when viewed from its front side, and can have a cut-out section 5a having an approximately L-shape cross-section at its top and extending rearward. The HL LED 4 can be housed within the cut-out section 5a so that the HL light guiding lens 5 as a whole can be located forward of the HL LED 4.

The front surface within the cut-out section 5a can serve as a light incident surface 51 so that the light emitted from the HL LED 4 can impinge on the light incident surface 51 to enter the HL light guiding lens 5. The light incident surface 51 can be located in front of, and obliquely below, the HL LED 4 and have a surface inclined rearward and upward so as to face to the HL LED 4.

The front surface of the HL light guiding lens 5 can be curved while being convex forward when viewed as a plan view and being inclined forward when viewed in a lateral view.

The front surface can have an upper portion in front of the light incident surface 51 being subjected to mirror finishing such as aluminum deposition. Thus, the upper portion can serve as a front reflection surface 52 configured to internally reflect the light having entered the HL light guiding lens 5 through the light incident surface 51 to a direction obliquely rearward and downward.

Furthermore, the front surface can have a lower portion serving as a light exiting surface 53 configured to allow the light to be projected therethrough forward from the inside of the HL light guiding lens 5. Specifically, the light exiting surface 53 can be located in front of a rear reflection surface 54 to be described later, and configured to allow the light having been internally reflected by the rear reflection surface 54 to be projected from the HL light guiding lens 5.

Note that in the present exemplary embodiment the portion of the front surface of the HL light guiding lens 5 other than the front reflection surface 52 (being the portion below the front reflection surface 52) is not required to be subjected to mirror finishing such as aluminum deposition. This is because the light entering through the light incident surface 51 can impinge thereon at an angle of incidence greater than the critical angle, thereby being reflected obliquely rearward and downward as in the front reflection surface 52.

The HL light guiding lens 5 can have a rear surface below the cut-out portion 5a so that the rear surface can be curved while being inclined forward with a greater gradient than that of the front surface (see Fig. 2). The portion of the rear surface located below and obliquely rearward of the front reflection surface 52 and in the rear of the light exiting surface 53 can serve as the rear reflection surface 54 configured to internally and forwardly reflect the light having been internally reflected by the front surface. The rear reflection surface 54 can be subjected to mirror finishing such as aluminum deposition. Specifically, the rear reflection surface 54 can be configured to internally and forwardly reflect the light having been internally reflected by the front surface of the HL light guiding lens 5 while collimating the light approximately along the front-rear direction when viewed as a lateral side view.

In the HL light guiding lens 5, there can be provided a see-through portion between the front reflection surface 52 and the rear reflection surface 54 in the vertical direction. The see-through portion can have a vertical length, for example, approximately 3 mm. The see-through portion is not subjected to mirror finishing such as aluminum deposition, so that the see-through portion can serve as the light-transmitting section 55 through which the light can pass forward. However, as described above, the front surface of the light-transmitting section 55 can internally reflect the light from the light incident surface 51 obliquely rearward and downward as in the front reflection surface 52.

The light-transmitting section 55 corresponds to a portion that is not utilized as the front and rear reflection surfaces 52 and 54 due to the rearward inclination of the HL light guiding lens 5. Specifically, the front surface of that portion can internally reflect the light from the light incident surface 51 without aluminum deposition while the light internally reflected by the front reflection surface 52 cannot impinge on the rear surface of that portion. This means the provision of the light-transmitting section 55 cannot adversely affect the HL function. Furthermore, there is no need to actually separate the front reflection surface 52 and the rear reflection surface 54 vertically in order to separately provide a light-transmitting section.

The DRL unit 3 can be disposed in the rear of the light-transmitting section 55 of the HL light guiding lens 5, and can include a DRL LED 6 and a DRL light guiding lens 7.

The DRL LED 6 can serve as the second light source in the claims and can be mounted on the front surface of a substrate 60 so that its light emission surface is directed forward while its optical axis Ax is aligned with the front-rear direction.

The DRL light guiding lens 7 can serve as the second light guiding lens in the claims and be disposed in front of the DRL LED 6, so as to control the light emitted from the DRL LED 6 to project the light forward with a controlled light distribution.

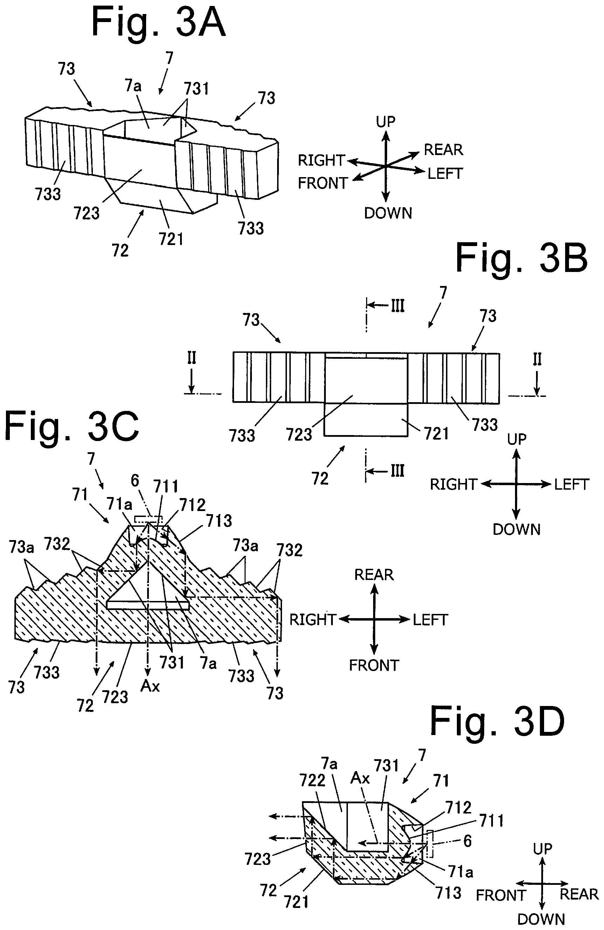

Figs. 3A, 3B, 3C, and 3D are diagrams illustrating the DRL light guiding lens 7, 3A a perspective view thereof, 3B a front view thereof, 3C a horizontal cross-sectional view thereof taken along II-II line of Fig. 3B, and 3D a vertical cross-sectional view thereof taken along III-III line of Fig. 3B.

As shown in the drawings, the DRL light guiding lens 7 can be shaped horizontally long with a width approximately equal to that of the HL light guiding lens 5. The DRL light guiding lens 7 can include a light incident portion 71 at the rear center thereof that can receive the light emitted from the DRL LED 6.

The light incident portion 71 can be formed in a truncated conical shape with its optical axis Ax as a rotation symmetric axis directed rearward. At the rearmost end of the light incident portion 71, there can be provided a concave portion 71a opened rearward.

The bottom of the concave portion 71a can serve as a first light incident surface 711 having an aspherical convex shape rearward with the optical axis Ax as a rotation symmetric axis so that the first light incident surface 711 is opposite to the DRL LED 6. The first light incident surface 711 can have a focal point at or near which the DRL LED 6 is disposed. Thus, the light emitted forward from the DRL LED 6 can enter the DRL light guiding lens 7 through the first light incident surface 711 while being collimated approximately along the front-rear direction by the same.

The inner peripheral surface of the concave portion 71a can serve as a second light incident surface 712. The second light incident surface 712 can be a truncated conical surface extending from the peripheral edge of the first light incident surface 711 rearward so as to cover the front periphery of the DRL LED 6. The thus configured second light incident surface 712 can receive the light emitted outwardly from the DRL LED 6 to allow the light to enter the DRL light guiding lens 7.

The outer peripheral surface of the light incident portion 71 can serve as a first reflection surface 713. The first reflection surface 713 can be a truncated conical surface extending from the tip (rear tip end) of the second light incident surface 712 while expanding forward and outward (away from the optical axis Ax). The thus configured first reflection surface 713 can internally reflect the light having entered the DRL light guiding lens 7 from the second light incident surface 712 so as to collimate the light approximately along the front-rear direction.

At the horizontal center of the DRL light guiding lens 7 located in front of the light incident portion 71, there can be provided a recessed portion 71 opened upward. The portion of the DRL light guiding lens 7 below the recessed portion 7a can serve as a center light guiding portion 72 that can guide part of the light having entered the DRL light guiding lens 7 from the light incident portion 71 to the horizontal center of the front surface of the DRL light guiding lens 7 to project the light forward.

The lower surface of the center light guiding portion 72 at its front end portion can serve as a planar second reflection surface 721 inclined forward and upward at an angle of inclination of 45 degrees, for example. Specifically, the second reflection surface 721 can be located in front of part of the lower light incident portion 71, so that the second reflection surface 721 can internally and upwardly reflect part of the light having entered the DRL light guiding lens 7 from the light incident portion 71 and guided by the center light guiding portion 72.

The upper surface of the center light guiding portion 72 at its front end portion can serve as a planar third reflection surface 722 in parallel with the second reflection surface 721. The third reflection surface 722 can be located above the second reflection surface 721 and in the rear of the horizontal center part of the light-transmitting section 55 of the HL light guiding lens 5. The third reflection surface 722 can internally and forwardly reflect the light having been internally reflected by the second reflection surface 721.

The front surface of the center light guiding portion 72 can serve as a planar center light exiting surface 723 approximately perpendicular to the front-rear direction. The center light exiting surface 723 can be located in front of the third reflection surface 722, or in the rear of the horizontal center of the light-transmitting section 55 of the HL light guiding lens 5. The center light exiting surface 723 can allow the light having been internally reflected by the third reflection surface 722 to be projected forward toward the horizontal center of the light-transmitting section 55.

The third reflection surface 722 and the center light exiting surface 723 can be provided to cover (correspond to) the light-transmitting section 55 of the HL light guiding lens 5 with a slightly larger size thereof in the vertical direction. (See Fig. 2.) Accordingly, part of the light having been internally reflected by the third reflection surface 722 and exiting through the center light exiting surface 723 can impinge on the area of the HL light guiding lens 5 above the light-transmitting section 55 to enter the HL light guiding lens 5 and be internally reflected by the front reflection surface 52.

The DRL light guiding lens 7 can include lateral light guiding portions 73 on both sides of the center light guiding portion 72. The lateral light guiding portions 73 can be configured to guide upper part of the light having entered the DRL light guiding lens 7 through the light incident portion 71 to be projected forward through the left and right front surface portions of the DRL light guiding lens 7.

Specifically, each of the lateral light guiding portions 73 can include a fourth reflection surface 731, a fifth reflection surface 732, and a lateral light exiting surface 733.

The fourth reflection surface 731 is a rear side of the recessed portion 7a and can be located in front of the upper part of the light incident portion 71. The fourth reflection surfaces 731 can be a pair of planes inclined laterally at an angle of inclination of 45 degrees, for example, with respect to the optical axis Ax and a boundary line vertically extending and passing the optical axis Ax. The fourth reflection surfaces 731 can internally reflect part of the light having entered the DRL light guiding lens 7 from the light incident portion 71 except for the part of the light to be guided through the center light guiding portion 72, so that the reflected light can be directed laterally (in the left and right directions) with respect to the optical axis Ax.

The fifth reflection surface 732 can include a plurality of reflection surfaces (732) provided on the rear surface of the DRL light guiding lens 7 on the left and right sides of the light incident portion 71. The portions on the left and right sides of the light incident portion 71 can be formed in an approximately step shape having step surfaces 73a. The step surfaces 73a can be located forward as the step surfaces 73a are away from the optical axis Ax in the left and right directions. The respective fifth reflection surfaces 732 can be formed as a plane in parallel with a nearer one of the pair of the fourth reflection surfaces 731. The respective fifth reflection surfaces 732 and the step surfaces 73a can be alternately continued to form the stepped surface as a whole. The plurality of the fifth reflection surfaces 732 can be located away from the pair of the fourth reflection surfaces 731 in the left and right directions while being located in the rear of the light transmitting section 55 of the HL light guiding lens 5 on its left and right side areas. The thus configured fifth reflection surfaces 732 can internally reflect the light having been internally reflected by the pair of the fourth reflection surfaces 731 in the left and right directions.

The lateral light exiting surface 733 can be shaped in a plane shape approximately perpendicular to the front-rear direction and disposed on either side of the center light exiting surface 723. The lateral light exiting surfaces 733 can be located in front of the plurality of the fifth reflection surfaces 732, or in other words, can be located in the rear of the light transmitting section 55 of the HL light guiding lens 5 on its left and right side areas. Accordingly, the light having been internally reflected by the plurality of the fifth reflection surfaces 732 can be allowed to pass through the lateral light exiting surfaces 733 toward the left and right side areas of the light-transmitting section 55. The lateral light exiting surfaces 733 may be provided with lens cuts on their surfaces in order to diffuse the exiting light horizontally.

As shown in Fig. 2, the fourth reflection surfaces 731, the fifth reflection surfaces 732, and the lateral light exiting surfaces 733 can be provided to correspond to the light-transmitting section 55 of the HL light guiding lens 5 with a slightly larger size thereof in the vertical direction as in the case of the third reflection surface 722 and the center light exiting surface 723 of the center light guiding portion 72. Accordingly, part of the light having been internally reflected by the fourth reflection surfaces 731 and then the fifth reflection surfaces 732 and exiting through the lateral light exiting surface 733 can impinge on the area of the HL light guiding lens 5 above the light-transmitting section 55 to enter the HL light guiding lens 5 and be internally reflected by the front reflection surface 52.

A description will now be given of the operation of the vehicle lighting unit 1 with the above configuration.

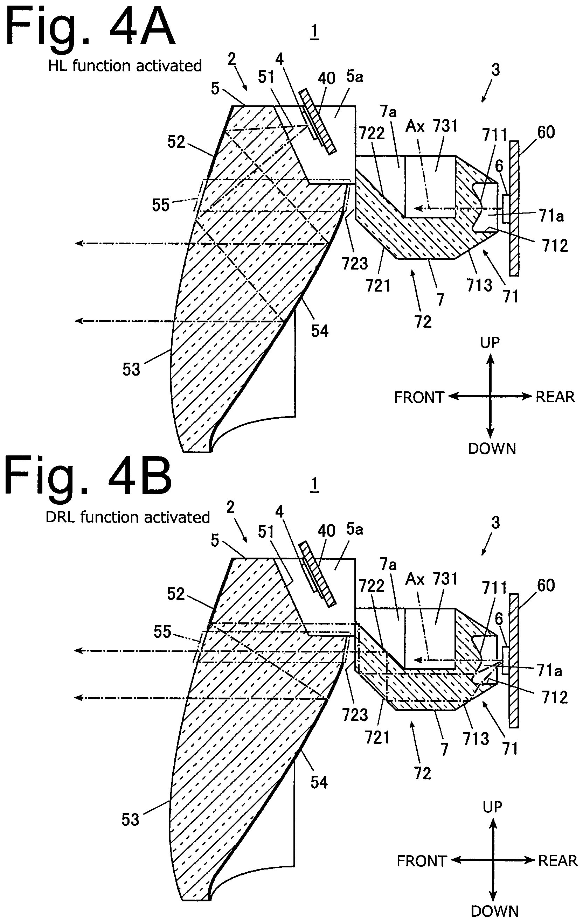

Figs. 4A and 4B are diagrams illustrating optical paths within the vehicle lighting unit 1 of the present exemplary embodiment. Specifically, Fig. 4A shows the optical paths when the vehicle lighting unit 1 works as a headlamp and Fig. 4B when it works as a DRL.

First, a description will be given of the vehicle lighting unit 1 functioning as a headlamp according to the following operation.

As shown in Fig. 4A, the HL LED 4 of the HL unit 2 can be turned on to emit light. The light can be controlled by the HL light guiding lens 5 in terms of light distribution, so as to form a high beam or a low beam in front of the vehicle body.

Specifically, the light emitted from the HL LED 4 can travel obliquely forward and downward to impinge on the light incident surface 51 of the HL light guiding lens 5. Then, the entered light can be internally reflected by the front surface of the HL light guiding lens 5 including the front reflection surface 52 obliquely rearward and downward. Then, the light can be internally reflected by the rear reflection surface 54 to exit through the light exiting surface 53, thereby forming a low beam or a high beam in front of the vehicle body.

Next, a description will be given of the vehicle lighting unit 1 functioning as a DRL according to the following operation.

As shown in Fig. 4B, the DRL LED 6 of the DRL unit 3 can be turned on to emit light. The light can be controlled by the DRL light guiding lens 7 in terms of light distribution and then projected forward through the HL light guiding lens 5.

Specifically, the light emitted from the DRL LED 6 can travel forward to impinge on the light incident portion 71. Then, the light can be collimated along the front-rear direction through the light incident portion 71 to enter the DRL light guiding lens 7.

Part of the lower part of the light can be internally reflected by the second reflection surface 721 upward and then be internally reflected by the third reflection surface 722 forward, so that the light can exit through the center light exiting surface 723.

The upper part and the remaining lower part of the light can be internally reflected by the pair of the fourth reflection surfaces 731 to be divided in the left and right directions. Then, the light can be internally reflected by the plurality of the fifth reflection surfaces 732, which are intermittently distributed in the left and right directions. At that time, the light can be diffused in the right and left directions. Thereafter, the light can exit the DRL light guiding lens 7 through the lateral light exiting surfaces 733 located on the left and right sides of the center light exiting surface 723.

The light from the two lateral light exiting surfaces 733 can enter the HL light guiding lens 5 through the light-transmitting section 55, to be projected forward. In this manner, the DRL function can light the front surface of the light-transmitting section 55 of the HL light guiding lens 5.

Further, part of the light exiting through the center light exiting surface 723 and the lateral light exiting surfaces 733 of the DRL light guiding lens 7 can impinge on the area of the HL light guiding lens 5 above the light-transmitting section 55. As in the case of HL function, that part of the light can be internally reflected by the front reflection surface 52 and then the rear reflection surface 54 of the HL light guiding lens 5 to exit through the light exiting surface 53. Therefore, when the DRL function is activated, in addition to the light-transmitting section 55, the light exiting surface 53 of the HL light guiding lens 5 can be lit with a low luminance.

As described above, in the vehicle lighting unit 1 of the present exemplary embodiment, the HL light guiding lens 5 can include the light-transmitting section 55 between the front reflection surface 52 and the rear reflection surface 54 for controlling light distribution in terms of the vertical direction. Then, the DRL unit 3 configured to function as a DRL can be located behind the light-transmitting section 55, so that the light from the DRL unit 3 can pass through the light-transmitting section 55 to be projected forward. This can eliminate the exposure of the DRL unit at a front portion of a vehicle body while the light from the DRL unit can be projected forward. Therefore, the light emission unit can be miniaturized more than the conventional vehicle headlamp in which two types of lenses for the headlamp function and the DRL function are exposed at a front portion of a vehicle body. The vehicle lighting unit of the present exemplary embodiment can effectively exhibit the DRL function while the light emission unit can be miniaturized more than the conventional one.

The light-transmitting section 55 configured to allow the light from the DRL unit 3 to pass therethrough can be disposed, in terms of the vertical direction, between the front reflection surface 52 configured to internally reflect light obliquely rearward and downward, and the rear reflection surface 54 configured to internally reflect the light from the front reflection surface 52 forward. This means an area of the light guiding lens that is difficult to contribute to the control of the light distribution can be effectively utilized as the light-transmitting section 55. Therefore, the DRL can be projected without enlarging the light emission unit of the HL light guiding lens 5 when compared with the case where a light-transmitting section is simply provided at an end portion of a light-guiding lens.

Furthermore, the light exiting surface 53 of the HL light guiding lens 5 being the light emission unit when functioning as a headlamp and the light-transmitting section 55 (the front surface thereof) of the HL light guiding lens 5 being the light emission unit when functioning as a DRL can be located adjacent to each other within the same HL light guiding lens 5. Therefore, the light emission units during the operation of the respective lamp functions can be observed with a similar sense of feeling when compared with the case where a conventional headlamp with a DRL unit separately operates the light emission units through two separate light guiding lenses.

The center light exiting surface 723 and the two lateral light exiting surface 733 of the DRL light guiding lens 7 can be provided to correspond to the light-transmitting surface 55 of the HL light guiding lens 5 with a slightly larger size thereof in the vertical direction. That is, the DRL unit 3 can emit part of the light toward the area above the light-transmitting section 55. Accordingly, when the DRL unit 3 is activated, part of the light can impinge on the area of the HL light guiding lens 5 above the light-transmitting section 55, and be internally reflected by the front reflection surface 52 and then the rear reflection surface 54 to exit through the light exiting surface 53. Therefore, when the DRL function is activated, in addition to the light-transmitting section 55, the light exiting surface 53 of the HL light guiding lens 5 can be lit with a low luminance. This means the appearance of the light emission surface can be made similar to that when the HL function is activated.

The above described embodiment is not limitative, and can be modified or changed as appropriate without departing from the scope of claims.

For example, in the above exemplary embodiment, the front reflection surface 52 of the HL light guiding lens 5 is configured to internally reflect light obliquely rearward and downward. However, the reflection direction can be obliquely rearward and toward any direction approximately perpendicular to the front-rear direction. Off course, in this case the other components should be corrected according to the changed way of reflection. This can be said that the configuration of the vehicle lighting unit 1 can be rotated around the center axis (optical axis) along the front-rear direction by any angle according to an intended application and/or design of the lighting unit.

The light source can be any other light sources than LEDs as long as the other light sources have the same or similar function as or to the LEDs.

The vehicle lighting unit 1 can be used singly or two or more of them can be combined. For example, part of the plurality of the vehicle lighting units 1 can serve as lighting units for forming a high beam while the remaining units can serve as lighting units for forming a low beam. In this case, all or part of the vehicle lighting units 1 can be turned on when the DRL function is activated.

The vehicle lighting unit 1 can preferably serve as a vehicle headlamp, but is not limitative. For example, the vehicle lighting unit 1 can serve as a rear lamp, a signal lamp, a decorative lamp, and the like.

## Claims

1. A vehicle lighting unit (1) comprising:
a first light source (4);
a light guiding lens (5) provided forward of the first light source (4), configured to project light emitted from the first light source (4) forward to form a high beam or a low beam; **characterized by**
a DRL unit (3) including a second light source (6), configured to function as a daytime running lamp,
the light guiding lens (5) including:
a front surface;
a rear surface;
a light incident surface (51) located in front of the first light source (4), configured to allow the light emitted from the first light source (4) to enter the light guiding lens (5) therethrough;
a front reflection surface (52) formed in the front surface, located in front of the light incident surface (51), the front reflection surface (52) configured to internally reflect the light having entered the light guiding lens (5) through the light incident surface (51) to a direction obliquely rearward and toward a first side with respect to an approximately perpendicular direction to a front-rear direction;
a rear reflection surface (54) formed in the rear surface, located at a portion of the rear surface in the direction obliquely rearward and toward the first side with respect to the front reflection surface (52), the rear reflection surface (54) configured to internally and forwardly reflect the light having been reflected by the front reflection surface (52);
a light exiting surface (53) formed in the front surface, located in front of the rear reflection surface (54), the light exiting surface (53) configured to allow the light having been reflected by the rear reflection surface (54) forward to be projected; and
a light-transmitting section (55), formed in the front surface (52), located between the front reflection surface (52) and the rear reflection surface (54) in terms of the perpendicular direction, the light-transmitting section (55) configured to allow light to pass therethrough in the front-rear direction,
the DRL unit (3) being disposed in the rear of the light-transmitting section (55) of the light guiding lens (5) so that the light emitted from the second light source (6) can be projected forward while allowing the light to pass through the light-transmitting section (55).

2. The vehicle lighting unit according to claim 1, wherein the DRL unit (3) is configured so as to emit part of light to a portion of the light guiding lens (5) toward a second side opposite to the first side where the light-transmitting section (55) is located, and
the part of light enters the light guiding lens (5) and is internally reflected by the front reflection surface (52) and then the rear reflection surface (54) to exit through the light exiting surface (53) forward.

3. The vehicle lighting unit according to claim 1 or 2, wherein the DRL unit (3) includes a second light guiding lens (7) disposed in front of the second light source (6), and
the second light guiding lens (7) includes:
a light incident portion (71) provided in a rear of the second light guiding lens (7), the light incident portion (71) collimating the light emitted forward from the second light source (6) approximately along the front-rear direction while allowing the light to enter the second light guiding lens (7);
a center light guiding portion (72) having a center light exiting surface (723) located in the rear of a center portion of the light-transmitting section (55) of the light guiding lens (5) with respect to a second perpendicular direction approximately perpendicular to the front-rear direction and the perpendicular direction, the center light guiding portion (72) configured to guide part of light having entered the second light guiding lens (7) through the light incident portion (71) on the first side to the center light exiting surface (723) to be projected forward;
lateral light guiding portions (73) having lateral light exiting surfaces (733) disposed on both sides of the center light exiting surface (723) in the second perpendicular direction and in the rear of the light-transmitting section (55) of the light guiding lens (5) on both sides of the center portion in the second perpendicular direction, the lateral light guiding portions (73) configured to guide remaining part of the light having entered the second light guiding lens (7) through the light incident portion (71) through the lateral light exiting surfaces (733) to be projected forward.

4. The vehicle lighting unit according to claim 3, wherein the light incident portion (71) of the second light guiding lens (7) includes:
a first light incident surface (711) disposed to be opposite to the second light source (6), the first light incident surface (711) configured to collimate the light emitted from the second light source (6) forward approximately along the front-rear direction to allow the light to enter the second light guiding lens (7);
a second light incident surface (712) extending from a peripheral edge of the first light incident surface (711) rearward, the second light incident surface (712) configured to receive light emitted outwardly from the second light source (6) to allow the light to enter the second light guiding lens (7); and
a first reflection surface (713) extending from a rear end of the second light incident surface (712) while expanding forward and outward, the first reflection surface (713) configured to internally reflect light having entered the second light guiding lens (7) through the second light incident surface (712) so that the light travels approximately along the front-rear direction.

5. The vehicle lighting unit according to claim 3 or 4, wherein the center light guiding portion (72) of the second light guiding lens (7) includes:
a second reflection surface (721) provided on the first side in part of the second light guiding lens (7) in front of the light incident portion (71), the second reflection surface (721) configured to internally reflect part of the light having entered the second light guiding lens (7) through the light incident portion (71) on the first side toward the second side; and
a third reflection surface (722) provided in the rear of the center light exiting surface (723) on the second side with respect to the second reflection surface (721), the third reflection surface (722) configured to internally reflect the light having been internally reflected by the second reflection surface (721) toward the center light exiting surface (723).

6. The vehicle lighting unit according to any one of claims 3 to 5, wherein the lateral light guiding portion (73) of the second light guiding lens (7) includes:
a fourth reflection surface (731) provided in the second light guiding lens (7) in front of the light incident portion (71) on the second side except for the part on the first side, the fourth reflection surface (731) configured to internally reflect part of the light having entered the second light guiding lens (7) through the light incident portion (71) except for the part of the light on the first side to the second perpendicular direction; and
a fifth reflection surface (732) provided in the rear of the lateral light exiting surface (733) in the second perpendicular direction with respect to the fourth reflection surface (731), the fifth reflection surface (732) configured to internally reflect the part of the light having been internally reflected by the fourth reflection surface (731).

## Patentansprüche

1. Fahrzeugbeleuchtungseinheit (1), die Folgendes aufweist:
eine erste Lichtquelle (4);
eine Lichtführungslinse (5), die vor der ersten Lichtquelle (4) vorgesehen ist, die konfiguriert ist, um das Licht, das von der ersten Lichtquelle (4) emittiert wird, nach vorne zu projizieren, um ein Fernlicht oder ein Abblendlicht zu bilden; **gekennzeichnet durch**:
eine DRL- bzw. Tagfahrlichtlampeneinheit (3), die eine zweite Lichtquelle (6) aufweist, die konfiguriert ist, um als eine Tagfahrlichtlampe bzw. DRL (DRL = Daytime Running Lamp) zu fungieren,
wobei die Lichtführungslinse (5) Folgendes aufweist:
eine vordere Oberfläche;
eine hintere Oberfläche;
eine Lichteintrittsfläche (51), die vor der ersten Lichtquelle (4) gelegen ist, die konfiguriert ist, um es zu ermöglichen, dass Licht, das von der ersten Lichtquelle (4) emittiert wird, in die Lichtführungslinse (5) durch diese eintritt;
eine vordere Reflexionsoberfläche (52), die in der vorderen Oberfläche gebildet ist, die vor der Lichteintrittsfläche (51) gelegen ist, wobei die vordere Reflexionsoberfläche (52) konfiguriert ist, um das Licht, das in die Lichtführungslinse (5) durch die Lichteintrittsfläche (51) eingetreten ist, in einer Richtung schräg nach hinten und zu einer ersten Seite in Bezug auf eine ungefähr senkrechte Richtung zu einer Vor-Rück-Richtung intern reflektiert wird;
eine hintere Reflexionsoberfläche (54), die vor der hinteren Oberfläche gebildet ist, die an einem Teil der hinteren Oberfläche in der Richtung schräg nach hinten und zu der ersten Seite in Bezug auf die vordere Reflexionsoberfläche (52) gelegen ist, wobei die hintere Reflexionsoberfläche (54) konfiguriert ist, um Licht, das durch die vordere Reflexionsoberfläche (52) reflektiert wurde, intern und nach vorne zu reflektieren;
eine Lichtaustrittsoberfläche (53), die in der vorderen Oberfläche gebildet ist, die vor der hinteren Reflexionsoberfläche (54) gelegen ist, wobei die Lichtaustrittsoberfläche (53) so konfiguriert ist, dass sie es ermöglicht, dass Licht, das durch die hintere Reflexionsoberfläche (54) reflektiert wurde, nach vorne projiziert wird; und
einen Lichtübertragungsabschnitt (55), der in der vorderen Oberfläche (52) gebildet ist, der im Hinblick auf die senkrechte Richtung zwischen der vorderen Reflexionsoberfläche (52) und der hinteren Reflexionsoberfläche (54) gebildet ist, wobei der Lichtübertragungsabschnitt (55) konfiguriert ist, um es zu ermöglichen, dass Licht durch diesen in der Vor-Rück-Richtung hindurchgeht,
wobei die Tagfahrlichtlampeneinheit (3) auf der Rückseite des Lichtübertragungsabschnitts (55) der Lichtführungslinse (5) so angeordnet ist, dass Licht, das von der zweiten Lichtquelle (6) emittiert wird, nach vorne projiziert werden kann, während es ermöglicht wird, dass Licht durch den Lichtübertragungsabschnitt (55) hindurchgeht.

2. Fahrzeugbeleuchtungseinheit gemäß Anspruch 1, wobei die Tagfahrlichtlampeneinheit (3) konfiguriert ist, um einen Teil des Lichts zu einem Teil der Lichtführungslinse (5) zu einer zweiten Seite hin zu emittieren, die der ersten Seite gegenüber liegt, an der der Lichtübertragungsabschnitt (55) gelegen ist, und
der Teil des Lichts in die Lichtführungslinse (5) eintritt und durch die vordere Reflexionsoberfläche (52) und dann die hintere Reflexionsoberfläche (54) intern reflektiert wird, um durch die Lichtaustrittsfläche (53) nach vorne auszutreten.

3. Fahrzeugbeleuchtungseinheit gemäß Anspruch 1 oder 2, wobei die Tagfahrlichtlampeneinheit (3) eine zweite Lichtführungslinse (7) aufweist, die vor der zweiten Lichtquelle (6) angeordnet ist, und
die zweite Lichtführungslinse (7) Folgendes aufweist:
einen Lichteinfallsteil (71), der auf einer Rückseite der zweiten Lichtführungslinse (7) vorgesehen ist, wobei der Lichteinfallsteil (71) das Licht parallel richtet bzw. kollimiert, das von der zweiten Lichtquelle (6) nach vorne emittiert wird, und zwar ungefähr entlang der Vor-Rück-Richtung, während es ermöglicht wird, dass Licht in die zweite Lichtführungslinse (7) eintritt;
einen mittleren Lichtführungsteil (72) mit einer mittleren Lichtaustrittsfläche (723), die auf der Rückseite eines mittleren Teils des Lichtführungsabschnitts (55) der Lichtführungslinse (5) in Bezug auf eine zweite senkrechte Richtung gelegen ist, die ungefähr senkrecht zu der Vor-Rück-Richtung und der senkrechten Richtung ist, wobei der mittlere Lichtführungsteil (72) konfiguriert ist, um einen Teil des Lichts, das in die zweite Lichtführungslinse (7) durch den Lichteinfallsteil (71) auf der ersten Seite eingetreten ist, zu der mittleren Lichtaustrittsfläche (723) zu lenken, um nach vorne projiziert zu werden;
laterale Lichtführungsteile (73) mit lateralen Lichtaustrittsflächen (733), die auf beiden Seiten der mittleren Lichtaustrittsfläche (723) in der zweiten senkrechten Richtung und auf der Rückseite des Lichtübertragungsabschnitts (55) der Lichtführungslinse (5) auf beiden Seiten des mittleren Teils in der zweiten senkrechten Richtung gelegen sind, wobei die lateralen Lichtführungsteile (73) konfiguriert sind, um den verbleibenden Teil des Lichts, das in die zweite Lichtführungslinse (7) durch den Lichteintrittsteil (71) eingetreten ist, durch die lateralen Lichtaustrittsflächen (733) nach vorne zu projizieren.

4. Fahrzeugbeleuchtungseinheit gemäß Anspruch 3, wobei der Lichteintrittsteil (71) der zweiten Lichtführungslinse (7) Folgendes aufweist:
eine erste Lichteintrittsfläche (711), die so angeordnet ist, dass sie der zweiten Lichtquelle (6) gegenüber liegt, wobei die erste Lichteintrittsfläche (711) konfiguriert ist, um das Licht zu kollimieren, das von der zweiten Lichtquelle (6) vorwärts emittiert wird, und zwar ungefähr entlang der Vor-Rück-Richtung, um es zu ermöglichen, dass das Licht in die zweite Lichtführungslinse (7) eintritt;
eine zweite Lichteintrittsfläche (712), die sich von einer peripheren Kante der ersten Lichteintrittsfläche (711) nach hinten erstreckt, wobei die zweite Lichteintrittsfläche (712) konfiguriert ist, um das Licht aufzunehmen, das von der zweiten Lichtquelle (6) nach außen emittiert wird, um es zu ermöglichen, dass Licht in die zweite Lichtführungslinse (7) eintritt; und
eine erste Reflexionsoberfläche (713), die sich von dem hinteren Ende der zweiten Lichteintrittsfläche (712) erstreckt, während sie sich nach vorne und nach außen erweitert, wobei die erste Reflexionsoberfläche (713) konfiguriert ist, um das Licht, das in die zweite Lichtführungslinse (7) durch die zweite Lichteintrittsfläche (712) eingetreten ist, so intern zu reflektieren, dass sich das Licht ungefähr entlang der Vor-Rück-Richtung fortbewegt.

5. Fahrzeugbeleuchtungseinheit gemäß Anspruch 3 oder 4, wobei der mittlere Lichtführungsteil (72) der zweiten Lichtführungslinse (7) Folgendes aufweist:
eine zweite Reflexionsoberfläche (721), die auf der ersten Seite an einem Teil der zweiten Lichtführungslinse (7) vor dem Lichteinfallsteil (71) vorgesehen ist, wobei die zweite Reflexionsoberfläche (721) konfiguriert ist, um einen Teil des Lichts, das in die zweite Lichtführungslinse (7) durch den Lichteintrittsteil (71) auf der ersten Seite eingetreten ist, zu der zweiten Seite hin intern zu reflektieren; und
eine dritte Reflexionsoberfläche (722), die auf der Rückseite der mittleren Lichtaustrittsfläche (723) auf der zweiten Seite in Bezug auf die zweite Reflexionsoberfläche (721) vorgesehen ist, wobei die dritte Reflexionsoberfläche (722) konfiguriert ist, um das Licht, das durch die zweite Reflexionsoberfläche (721) intern reflektiert worden ist, zu der mittleren Lichtaustrittsfläche (723) intern zu reflektieren.

6. Fahrzeugbeleuchtungseinheit gemäß einem der Ansprüche 3 bis 5, wobei der laterale Lichtführungsteil (73) der zweiten Lichtführungslinse (7) Folgendes aufweist:
eine vierte Reflexionsoberfläche (731), die in der zweiten Lichtführungslinse (7) vor dem Lichteinfallsteil (71) auf der zweiten Seite vorgesehen ist, mit Ausnahme des Teils auf der ersten Seite, wobei die vierte Reflexionsoberfläche (731) konfiguriert ist, um einen Teil des Lichts, das in die zweite Lichtführungslinse (7) durch den Lichteinfallsteil (71) eingetreten ist, mit Ausnahme des Teils des Lichts auf der ersten Seite, zu der zweiten senkrechten Richtung hin intern zu reflektieren; und
eine fünfte Reflexionsoberfläche (732), die auf der Rückseite der lateralen Lichtaustrittsfläche (733) in der zweiten senkrechten Richtung in Bezug auf die vierte Reflexionsoberfläche (731) vorgesehen ist, wobei die fünfte Reflexionsoberfläche (732) konfiguriert ist, um den Teil des Lichts intern zu reflektieren, der durch die vierte Reflexionsoberfläche (731) intern reflektiert worden ist.

## Revendications

1. Unité d'éclairage de véhicule (1) comprenant :
une première source de lumière (4) ;
une lentille de guidage de lumière (5) prévue à l'avant de la première source de lumière (4), configurée pour projeter la lumière émise par la première source de lumière (4) vers l'avant pour former un feu de route ou un feu de croisement ; et
une unité DRL (3) comprenant une deuxième source de lumière (6), configurée pour fonctionner comme un feu de circulation de jour,
la lentille de guidage de lumière (5) comprenant :
une surface avant ;
une surface arrière ;
une surface incidente à la lumière (51) située devant la première source de lumière (4), configurée pour permettre à la lumière émise par la première source de lumière (4) d'entrer dans la lentille de guidage de lumière (5) à travers celle-ci ;
une surface de réflexion avant (52) formée dans la surface avant, située devant la surface incidente à la lumière (51), la surface de réflexion avant (52) étant configurée pour réfléchir de façon interne la lumière ayant pénétré dans la lentille de guidage de lumière (5) à travers la surface incidente à la lumière (51) dans une direction oblique vers l'arrière et vers un premier côté par rapport à une direction approximativement perpendiculaire à une direction avant-arrière ;
une surface de réflexion arrière (54) formée dans la surface arrière, située au niveau d'une partie de la surface arrière dans la direction oblique vers l'arrière et vers le premier côté par rapport à la surface de réflexion avant (52), la surface de réflexion arrière (54) étant configurée pour refléter vers l'intérieur et vers l'avant la lumière qui a été réfléchie par la surface de réflexion avant (52) ;
une surface de sortie de lumière (53) formée dans la surface avant, située devant la surface de réflexion arrière (54), la surface de sortie de lumière (53) étant configurée pour permettre à la lumière ayant été réfléchie par la surface de réflexion arrière (54) vers l'avant d'être projetée ; et
une section de transmission de lumière (55), formée dans la surface avant (52), située entre la surface de réflexion avant (52) et la surface de réflexion arrière (54) par rapport à la direction perpendiculaire, la section de transmission de lumière (55) étant configurée pour permettre à la lumière de passer à travers celle-ci dans la direction avant-arrière,
l'unité DRL (3) étant disposée à l'arrière de la section de transmission de lumière (55) de la lentille de guidage de lumière (5) de sorte que la lumière émise par la deuxième source de lumière (6) puisse être projetée vers l'avant tout en permettant à la lumière de passer à travers la section de transmission de lumière (55).

2. Unité d'éclairage de véhicule selon la revendication 1, dans laquelle l'unité DRL (3) est configurée de façon à émettre une partie de la lumière vers une partie de la lentille de guidage de la lumière (5) vers un deuxième côté opposé au premier côté où la section de transmission de lumière (55) est située, et
la partie de la lumière pénètre dans la lentille de guidage de la lumière (5) et est réfléchie de façon interne par la surface de réflexion avant (52) puis par la surface de réflexion arrière (54) pour sortir à travers la surface de sortie de lumière (53) vers l'avant.

3. Unité d'éclairage de véhicule selon la revendication 1 ou 2, dans laquelle l'unité DRL (3) comprend une deuxième lentille de guidage de lumière (7) disposée devant la deuxième source de lumière (6), et
la deuxième lentille de guidage de lumière (7) comprend :
une partie incidente à la lumière (71) prévue à l'arrière de la deuxième lentille de guidage de lumière (7), la partie incidente à la lumière (71) collimatant la lumière émise vers l'avant par la deuxième source de lumière (6) approximativement selon la direction avant-arrière tout en permettant à la lumière d'entrer dans la deuxième lentille de guidage de lumière (7) ;
une partie de guidage de lumière centrale (72) ayant une surface de sortie de lumière centrale (723) située à l'arrière d'une partie centrale de la section de transmission de lumière (55) de la lentille de guidage de lumière (5) par rapport à une deuxième direction perpendiculaire sensiblement perpendiculaire à la direction avant-arrière et à la direction perpendiculaire, la partie de guidage de lumière centrale (72) étant configurée pour guider une partie de la lumière ayant pénétré dans la deuxième lentille de guidage de lumière (7) à travers la partie incidente à la lumière (71) du premier côté de la surface centrale de sortie de lumière (723) pour qu'elle soit projetée vers l'avant ;
des parties de guidage de lumière latérales (73) ayant des surfaces de sortie de lumière latérales (733) disposées des deux côtés de la surface de sortie de lumière centrale (723) dans la deuxième direction perpendiculaire et à l'arrière de la section de transmission de lumière (55) de la lentille de guidage de lumière (5) sur les deux côtés de la partie centrale dans la deuxième direction perpendiculaire, les parties de guidage de lumière latérales (73) étant configurées pour guider la partie restante de la lumière ayant pénétré dans la deuxième lentille de guidage de lumière (7) à travers la partie incidente à la lumière (71) à travers les surfaces latérales de sortie de lumière (733) qu'elle soit projetée vers l'avant.

4. Unité d'éclairage de véhicule selon la revendication 3, dans laquelle la partie incidente à la lumière (71) de la deuxième lentille de guidage de lumière (7) comprend :
une première surface incidente à la lumière (711) disposée pour être à l'opposé de la deuxième source de lumière (6), la première surface incidente à la lumière (711) étant configurée pour collimater la lumière émise par la deuxième source de lumière (6) vers l'avant approximativement selon la direction avant-arrière pour permettre à la lumière d'entrer dans la deuxième lentille de guidage de lumière (7) ;
une deuxième surface incidente à la lumière (712) s'étendant depuis un bord périphérique de la première surface incidente à la lumière (711) vers l'arrière, la deuxième surface incidente à la lumière (712) étant configurée pour recevoir la lumière émise vers l'extérieur par la deuxième source de lumière (6) pour permettre à la lumière d'entrer dans la deuxième lentille de guidage de lumière (7) ; et
une première surface de réflexion (713) s'étendant depuis une extrémité arrière de la deuxième surface incidente à la lumière (712) tout en s'étendant vers l'avant et vers l'extérieur, la première surface de réflexion (713) étant configurée pour réfléchir de façon interne la lumière ayant pénétré dans la deuxième lentille de guidage de lumière (7) à travers la deuxième surface incidente à la lumière (712) de sorte que la lumière se déplace approximativement selon la direction avant-arrière.

5. Unité d'éclairage de véhicule selon la revendication 3 ou 4, dans laquelle la partie de guidage de lumière centrale (72) de la deuxième lentille de guidage de lumière (7) comprend :
une deuxième surface de réflexion (721) prévue sur le premier côté dans une partie de la deuxième lentille de guidage de lumière (7) devant la partie incidente à la lumière (71), la deuxième surface de réflexion (721) étant configurée pour réfléchir de façon interne une partie de la lumière ayant pénétré dans la deuxième lentille de guidage de lumière (7) à travers la partie incidente à la lumière (71) du premier côté vers le deuxième côté ; et
une troisième surface de réflexion (722) prévue à l'arrière de la surface de sortie de lumière centrale (723) du deuxième côté par rapport à la deuxième surface de réflexion (721), la troisième surface de réflexion (722) étant configurée pour réfléchir de façon interne la lumière qui a été réfléchie de façon interne par la deuxième surface de réflexion (721) vers la surface de sortie de lumière centrale (723).

6. Unité d'éclairage de véhicule selon l'une quelconque des revendications 3 à 5, dans laquelle la partie de guidage de lumière latérale (73) de la deuxième lentille de guidage de lumière (7) comprend :
une quatrième surface de réflexion (731) prévue dans la deuxième lentille de guidage de lumière (7) devant la partie incidente à la lumière (71) du deuxième côté, à l'exception de la partie du premier côté, la quatrième surface de réflexion (731) étant configurée pour réfléchir de façon interne une partie de la lumière ayant pénétré dans la deuxième lentille de guidage de lumière (7) par la partie incidente à la lumière (71) à l'exception de la partie de la lumière située du premier côté vers la deuxième direction perpendiculaire ; et
une cinquième surface de réflexion (732) prévue à l'arrière de la surface de sortie de lumière latérale (733) dans la deuxième direction perpendiculaire par rapport à la quatrième surface de réflexion (731), la cinquième surface de réflexion (732) étant configurée pour réfléchir de façon interne la partie de la lumière ayant été réfléchie de façon interne par la quatrième surface de réflexion (731).
